# EUROPEAN PATENT SPECIFICATION

(11) **EP 3 627 393 B1**
(45) Date of publication and mention of the grant of the patent: **28.10.2026**
(21) Application number: 18195226.8
(22) Date of filing: 18.09.2018
(51) Int. Cl.: G06K 19/00, B33Y 10/00, B33Y 99/00, B29C 64/386

(54) **PRODUCT MADE WITH ADDITIVE MANUFACTURING HAVING UNIQUE IDENTIFIER**
ADDITIV HERGESTELLTES PRODUKT MIT EINDEUTIGER IDENTIFIZIERUNG
PRODUIT FABRIQUÉ AVEC DES ADDITIFS AYANT UN IDENTIFICATEUR UNIQUE

(43) Date of publication of application: 25.03.2020
(73) Proprietor: Siemens Energy Global GmbH & Co. KG, 81739 München (DE)
(72) Inventor: Fornander, Jerry, 61232 Finspang (SE); Graichen, Andreas, 60211 Norrköping (SE); Jetzfellner, Thomas, 85609 Aschheim (DE); Lindstam, Johan, SE-60371 Norrköping (SE); Sauer, Markus, 81739 München (DE); Sturm, Monika, 1190 Wien (AT)

(56) References cited:
- CN-B- 106 079 436
- DE-A1- 102014 005 801
- GB-A- 2 523 597
- US-A1- 2004 066 278
- US-A1- 2015 235 069
- US-A1- 2016 067 927
- US-A1- 2016 146 153
- US-A1- 2017 128 153
- US-A1- 2017 182 710

## Description

The invention refers to a product manufactured using an additive manufacturing process providing advanced features improving its applicability. Furthermore, the invention refers to a data structure product related to said product. Furthermore, the invention refers to a kit containing the product and the data structure product. Furthermore, the invention refers to a method of using the product. Furthermore, the invention refers to a machine containing the product or a part of the kit.

Modern machines like streaming engines operate at extreme conditions to optimize the energy yielded herewith. Despite new developments with regard to materials and improved operation conditions the stress applied on the components constantly increases and draws nearer to the limits of these components. Taking into account the great damages possibly resulting from failures of such components during usage in, for example, streaming engines, the balance between increased stress and providing a safety zone is a constant point of discussion. As the components are constantly optimized and provide further improved characteristics tailored to the specific needs the variety of specific products increases. Especially modern method of manufacturing like additive manufacturing allows to provide highly specified products. However, as the number of products grow and the characteristics are specifically tailored according to the specific need the exact and reliable identification and acquiring the specific related data to the specific product becomes especially important. Also wrong use of such products can result in great damages being the point of later disputes. However, identifying the specific components after some greater damage occurred provides major challenges.

Examples of prior art within the generic technical area of the present art are as follows. For example,
US 2017/182710 A1 refers to a three-dimensional fabricated object manufacturing apparatus. For example,
DE 10 2014 005 801 A1 refers to a data carrier, in particular a document of value, security paper, identity card, branded article or the like, a series of data carriers with an individualizing identifier consisting of several characters, which individualizes the data carrier from a series of data carriers, the individualizing Identifier has a design that is characterized by the structural parameters of the geometric arrangement of the characters relative to one another, orientation of the characters, size of the characters, line thickness of the characters, spacing of the characters, font of the characters, color of the characters and possibly the type of numeric font. For example, US 2016/0067927 A1 refers to a three dimensional printed object with embedded identification elements. For example, GB 2523597 A refers to a marking in 3D printing. For example, US 2004066278 A1 refers to a method of securing communications in an RFID system including a reader and an RF tag.

Therefore, there is a need to provide means solving such problems to enable the future improvement of products like components of streaming engines while reducing risks and prevent later disputes.

The invention is defined by the independent claims. Preferred embodiments are set out in the dependent claims.

To simplify the understanding of the present invention it is referred to the detailed description hereafter and the figures attached as well as their description. However, the invention is not to be understood being limited to the embodiments as disclosed in the detailed description as they represent embodiments providing additional benefits to solve specific problems or fulfilling specific needs. Also, the figure is to be understood being not limiting the scope of the present invention, but disclosing a preferred embodiment explaining the invention further.

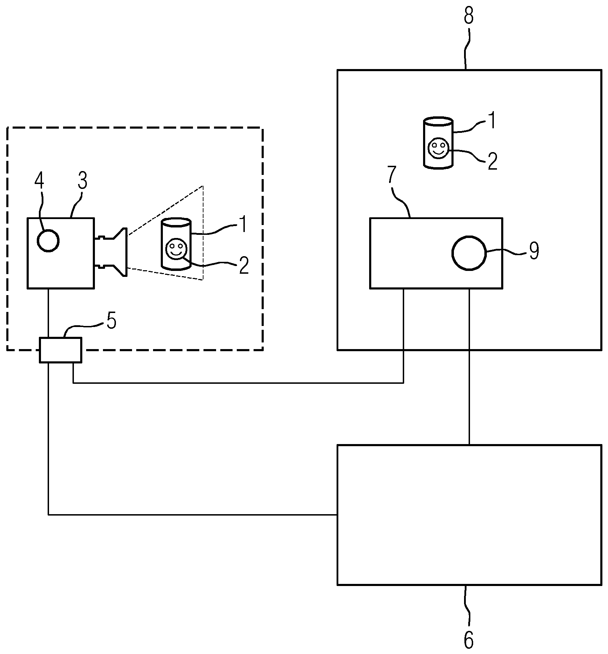

Fig. 1 shows a schematic drawing of an example of the use of the inventive product.

The embodiments hereafter contain, unless specified otherwise, at least one processor and/or data storage to implement the inventive method.

The product contains a unique identifier, wherein the unique identifier (2) contains a data storage (5), wherein the data storage (5) contains an electronic key belonging to the specific product (1) and/or data adapted to access a data storage (5) and/or to access a distributed database to retrieve information related to the specific product. Such unique identifier can be used to identify the specific product unit to, for example, retrieve most detailed information regarding this part like details to the additive manufacturing process from a distributed database being protected against manipulation. Also it can, for example, be used to retrieve data regarding the use of said products from such distributed database.

The protection of the distributed database against manipulation can be realized using methods and means as available to a person skilled in the art. For example, said distributed database can be realized as blockchain to ensure that older data of the blockchain contained in earlier blocks is not manipulated by comparing the connection between older and newer blocks of the blockchain. Furthermore, the distributed database can be realized as encrypted database allowing new data to be added and old data to be retrieved only by a trusted party. Furthermore, it can be a peer-to-peer network allowing only access of a specified persons and/or a correspondingly restricted access.

The term "processing unit" as used herein refers to data processing units as used for processing data. Herein, for example, checksums and cryptographic checksums are generated, smart contracts are executed, measured and predefined values are compared, a reaction to a specific situation a determined, an output is generated, a part of a data set is reconstructed, a checksum, preferably cryptographic checksum, is validated, new blocks for a blockchain are generated, new blocks are integrated in the blockchain, and so on. Such processing unit can, for example, be found in computers, clients, smart phones, and servers. For example, such processing unit can also be found in knots of the distributed database like a blockchain.

Unless specified otherwise terms like "calculate", "process", "determine", "generate", "configure", "reconstruct" and comparable terms refer to actions and/or processes and/or steps modifying data and/or creating data and/or converting data, wherein the data are presented as physical variable or are available as such.

The term "data storage" or comparable terms as used herein, for example, refer to a temporary data storage like RAM (Random Access Memory) or long term data storage like hard drives or data storage units like CDs, DVDs, USB sticks and the like.

The term "smart contract" as used herein especially includes data like program data or data being able to be executed by a program to perform specified steps or actions including control commands, specified values, requirements, interrelated data like measured values and corresponding action in response to fulfilling or not fulfilling predefined values in comparison to said measured values. For example, executing the smart contract can be done by a correspondingly selected distributed database or a runtime environment like a virtual machine. Preferably, such means for executing the smart contract are turing complete. Typically, it is preferred that the smart contract is executed using the infrastructure of the distributed database.

The term "cryptographic checksum" as used herein refers to a data checksum preferably acquired using a cryptographic hash function on the corresponding data or a part of the corresponding data. Furthermore, it can especially refer to a digital signature or a cryptographic authentication code adapted to be used to verify data used to generate the cryptographic checksum to protect against manipulation. Herein, such cryptographic checksum can, for example, be provided for each sensor data acquired or for the complete monitored data. Providing a multitude of cryptographic checksum typically provided a higher protection against manipulation. Providing such cryptographic checksum for, for example, a complete block to be included in the distributed database typically reduces the required workload for the processing unit, but decreases the data security at least slightly.

The term "distributed database" as used herein refers to a decentralized database like a blockchain, a distributed ledger, a distributed data storage system, a distributed ledger technology based system, a manipulation proof database, a cloud, a cloud service, a blockchain in a cloud or a peer-to-peer database. Herein, such distributed database can be a public database like a public blockchain or a non public database like a private blockchain. Typically, it is preferred that such blockchain is non public and can only be accessed by authorized persons. Herein, such access right might also be granted for external persons to allow a review of for example the production data of specific products.

According to further embodiments such distributed database preferably provides a further encryption dividing the data contained therein into subsections. This allows to provide access to specific data for specific persons. It was noted that such method is very beneficial, for example, in case a costumer is granted the right to review the production data of a specific product, while the data regarding other products contained in the distributed database is to be kept secret. Alternatively or additionally the distributed database can be split into at least two sub databases, wherein these sub databases are split up according to, for example, different costumers, an official part and an unofficial part, or the like. For example, such official part can contain the sensor data of different layers of a product produced using additive manufacturing and the construction data of said product. While the inofficial part may contain the specific working conditions of an additive manufacturing device based on the construction data provided by a costumer and the internal know how to realize such structure.

The term "data block" as used herein refers to a block of a distributed database like a blockchain or a peer-to-peer database. It may contain data regarding the size of the data block, a block header, a counter of monitored data, sensor data and/or monitored data. Said block header can, for example, contain a version number, a checksum, or a time stamp.

According to further embodiments the additive manufacturing process preferably is a 3D-printing process, more preferred selected from the group consisting of selective laser melting, selective laser sintering, electron beam melting and binder jetting, even more preferred from the group consisting of selective laser melting and electron beam melting. These manufacturing methods provided a flexible production method allowing to easily adapt, for example, the placement of the unique identifier to hide its exact location and, for example, to prevent its manipulation.

According to further embodiments the product preferably is part of a streaming engine, more preferred a gas turbine or steam turbine. It was noted that these products typically benefit greatly from the unique identifier to provide specifically tailored characteristics optimized for the very specific use without, for example, risking a mix-up or associating incorrect highly specified operating data.

According to further embodiments the product preferably is selected from the group consisting of heat shields, blades, vanes, burners and parts of a burner like burner tips. Such components represent very stressed components typically benefitting especially from the invention.

According to further embodiments the unique identifier preferably is manufactured using the additive manufacturing process. While this typically limits the unique identifier to more simply kinds of identifications this allows, for example, to hide the unique identifier being something like a specific pattern on the surface clearly visible yet unreadable without further information. This also allows even completely hiding the presence of such unique identifier from the view of non entitled persons. Also using additive manufacturing like especially 3D-printing allows to create such indentifiers without great effort or even automatically.

According to further embodiments the unique identifier preferably is a RFID tag introduced into and/or attached to the product, more preferred being introduced into the product.

This, for example, allows to easily read the unique identifier using commonly available means.

According to further embodiments the unique identifier preferably is a contactless identifier not requiring a contact or visual recognition to the identified. An example of such unique identifier is an RFID tag or a unique identifier containing a wireless interface like a Bluetooth beacon or WLAN module. This, for example, allows to integrate the unique identifier into the product rendering it invisible yet allowing to easily access the corresponding data.

According to further embodiments the product preferably contains at least two different unique identifier, more preferred at least one being manufactured using an additive manufacturing process, more preferred during the manufacturing process of the product, and at least one unique identifier at least in part not produced using additive manufacturing. Typically it is preferred that the unique identifier at least in part not produced using additive manufacturing is a contactless identifier not requiring a contact or visual recognition to the identified. This allows to, for example, secure collected data in the product by first providing an easy accessible unique identifier allowing to identify the product unit. Based on this information an entitlement request can be send to receive, for example a cryptographic key or communication data to read out collected data by means of the second unique identifier and its stored identification data.

According to further embodiments the unique identifier preferably is a hidden unique identifier. Hiding the unique identifier is, for example, beneficial to increase the security. For example, such hidden identifier can be not visible. Also as contactless unique identifier can, for example, be configured to only transmit the correct data when a specific cryptographic key or communication protocol is used.

According to further embodiments the unique identifier preferably is connected to an energy source, wherein the energy source is adapted to at least temporarily power the unique identifier or a connected component to send a signal, wherein the signal contains data of the unique identifier. For example, such energy source can be a rechargeable or non rechargeable energy source. For example, in case the energy source is only meant to temporarily provide power in case of temporary interruption of a connection to a standard power source or during transport to provide at least a basic functionality of the unique identifier it can be preferred to provide an energy source like a non rechargeable battery. However, for example in case the energy source is meant to essentially permanently empower the unique identifier or a connected component during usage it is typically preferred to provide a rechargeable energy source like a rechargeable battery or a condensator. Although, including such energy source into the product significantly raises the complexity of the manufacturing process it provides a significant benefit for many embodiments.

According to further embodiments the product preferably is adapted to transmit data regarding the unique identifier wireless or to read out data regarding the unique identifier wireless. This is a typically easily applicable and reliable type of unique identifier.

According to further embodiments the additive manufacturing preferably is 3D-printing, more preferred selected from the group consisting of selective laser melting, electron beam melting and binder jetting, even more preferred from the group consisting of selective laser melting and electron beam melting. These manufacturing methods are typically especially suited for the present invention. Especially, they allow an easy adaption to the specific requirements and even directly building highly precise unique identifier during the manufacturing process.

According to further embodiments the unique identifier preferably contains a data storage, wherein the data storage contains an electronic key belonging to the specific product and/or data adapted to access a data storage and/or distributed database to retrieve information related to the specific product. It was noted that such embodiment was typically very beneficial as it provides a secure prove of entitlement to retrieve optimized operating data, maintenance data and the like.

According to further embodiments the unique identifier preferably contains a processing unit, wherein the processing unit is adapted to authenticate a request regarding the unique identifier. For example, this allows retrieving the information regarding the unique identifier only by authorized personal or devices. For example, an encrypted dataset can be downloaded from a distributed database and transmitted to the product. Such encrypted dataset can be decrypted and authenticated by such processing unit, before it triggers sending data regarding the unique identifier. Herein, such data send by the unique identifier can also be encrypted to be transmitted, for example, to a transmitted to a data storage and/or a distributed database being adapted to store or decrypt such dataset. Such returned decrypted dataset can, for example, trigger new actions like providing a specific data structure product relating to said product. This allows providing specific data like operational data, maintenance data or the like on demand without the risk of uncontrolled distribution of said data. Also it can be used to ensure that corresponding data is available in case later questions arise. For example, it can be arranged to lay down specific data regarding the manufacturing of said product in a distributed database being protected against manipulation like a blockchain. In case later problems arise with regard to said product information required so solve a dispute can be retrieved from such database in a secure fashion without the need to grant the other party an unrestricted review of a multitude of corresponding information at any time.

According to further embodiments the unique identifier preferably contains a wireless interface contained in the product. For example, such wireless interface can be a Bluetooth beacon allowing a data exchange between, for example, the unique identifier and a machine containing the product or an operator controlling a machine containing the product using Bluetooth.

According to another aspect the invention refers to a data structure product containing data regarding a specific inventive product, wherein the data structure product is adapted to be associated to the specific product using the unique identifier. Providing such highly specific data structure product surprisingly typically provides great benefits despite the amount of storage capacity being a corresponding misfit. However, surprisingly it was found that providing such data storage product specifically adapted to the specific product unit, for example, greatly simplifies the work on the side of the user of the product and to provide updates regarding specific product types in a highly exact and controlled way.

According to further embodiments the data structure product preferably is stored on a data storage or a distributed database, more preferred a distributed database, not being part of the product. This, for example, allows to modify the data storage product at a central location and to introduce updates and further data without problem.

According to further embodiments the data structure product preferably contains a smart contract. For example, such smart contract can be connected to specific sensor data monitoring a characteristic like the temperature of the product during usage. In case a predefined temperature is exceeded data structure product can, for example, send a signal to device containing the product like a streaming engine. Herein, the machine can adapt the operating conditions to prevent a damage or even failure of the product. Also such data associated with, for example, exceeding a predefined operating condition can be stored in a data storage or distributed database being protected against manipulation to record such event. Also such signal triggered by a smart contract can be used to inform the operators controlling the device containing the product to take action. Also it can be used to automatically influence the device containing the product to, for example, adapt the operating mode of the device or even shut down the device.

Storing such smart contracts centralized, preferably in a distributed database, allows to easily adapt such smart contract based on the current demand. In such distributed database it can be easily updated and introduced into a local data storage contained at the location of a machine containing the product or the machine itself. For example, such smart contract can be adapted to provide a long lifetime of each component, especially the inventive product, to reduce the number of inspection and the required replacement of components. However, the demand can also change, for example to the provision of a high performance neglecting an increase demand for maintenance. This can be, for example, especially interesting in case of streaming engines having very long lifetimes and being required to adapt to the current needs based on, for example, the present situation in view of renewable energy sources. Thus, the adaption can be carried out centrally, wherein the complete information from the specific product is taken into account. Then such updated smart contract data can be downloaded onto the specific site or machine on a regular basis or on demand.

According to further embodiments the data structure product preferably contains operational data, maintenance data, security keys and/or communication data of the product. It was noted that providing such data typically provides a great benefit for the user of the machines allowing an easy retrieval of corresponding information if required.

According to further embodiments the data structure product preferably contains manufacturing data of the product. Securing the data directly in the product allows to, for example, provide an additional security in case of a later dispute. Also such data can be, for example, used to provide information to simulate the operation of the product using, for example, a digital twin.

According to further embodiments the data structure product preferably contains data regarding the position of the unique identifier and/or data required to read out the unique identifier. Hiding the position of the unique identifier, for example, increases the security allowing only entitled persons to read out the identification data.

According to another aspect the invention refers to a kit containing an inventive product and an inventive data structure product.

According to further embodiments data in the distributed database preferably is stored as blocks, wherein the blocks are interconnected, preferably using a cryptographic hash function. This allows to further increase the data security, even if the blocks are, for example, stored on servers possibly being a point of cyberattacks and tries to manipulate the data. Typically, it is preferred that such blocks are part of a blockchain.

According to another aspect the invention refers to a method of using an inventive product, wherein the use contains the step of acquiring an inventive data structure product from a data storage or a distributed database, more preferred from a distributed database, based on the unique identifier of the product. Herein, it is especially preferred that the data storage or the distributed database, more preferred the distributed database, is protected against manipulation.

According to another aspect the invention the unique identifier is read using an identifying unit containing a processing unit, wherein preferably the processing unit is a hardware oracle like a blockchain chip, and wherein the processing unit is adapted to connect to the distributed database. Typically, it is preferred that such processing unit provides a cryptographic checksum. This allows to, for example, verify data send from the unique identifier to a data storage or distributed database used to monitor the product during use or review the operation of the product after use. The term "hardware oracle" as used herein refers to a device containing security elements enabling the device using software security means like cryptographic methods, mechanical security means like lockable enclosing or electronical security means like means deleting the data of the device in case of tampering. Typically, it is preferred that such hardware oracle at least contains cryptographic keys. For many embodiments it is preferred that the processing unit is a blockchain chip. It was noted that despite the higher costs and requirements resulting from this the possibility to encrypt the acquired data using hardware means proved to be especially beneficial. For example, it allows to securely provide a manipulation proof data set being a reliable source of data to be verified or used in later review processes of a manufacturing process.

According to further embodiments the unique identifier preferably is manufactured using the additive manufacturing process, more preferred using 3D-printing like selective laser melting or electron beam melting.

According to another aspect the invention refers to a machine, more preferred a streaming engine, containing an inventive product or at least a part of an inventive kit.

According to further embodiments the machine preferably contains a data storage containing an inventive data structure product and/or has access to a data storage or distributed database containing an inventive data structure product. For example, such local data storage can be used to store operating data or maintenance data regarding the product. Herein, the unique identifier can be used to identify the corresponding data to be downloaded locally. This allows to react to, for example, predefined conditions based on such operating data even if the machine is not connected to the distributed database. Such unique identifier based distribution of operating data and the like stored centrally at the manufacturer of the machine like a streaming engine further provides the benefit that the data can be adapted to specific needs of the specific machine in case, for example, the mode of the machine should be changed from high performance to extended time between maintenance intervals in case the owner of the machine adapts his business model. This can be, for example, especially interesting in case of streaming engines having very long lifetimes and being required to adapt to the current needs based on, for example, the present situation in view of renewable energy sources.

According to further embodiments the machine preferably contains a data prioritization unit adapted calculate a priority based on data regarding the unique identifier of the product. Typically, it is preferred that the priority is based on a combination of data regarding the unique identifier and data regarding the condition of the product like sensor data relating to the product. Such priority can be stored in data relating to the condition of the product and/or along such data. This, for example, can be used to prioritize the processing of data provided with regard to the product providing the unique identifier. For example, if such data with high priority should be stored in the distributed database system, the difficulty of a cryptographic puzzle is adapted to speed up the validation and storing process. This, for example, can be beneficial in cases where the sensor data indicate an event (e.g., a malfunction of a/the manufacturing device) which needs preferably taken care of as fast as possible. Additionally or alternatively the distributed database system adjusts the transmission speed of the sensor data within the network of nodes of the distributed database system based on the priority. This, for example, can be beneficial in cases where the sensor data needs to be rapidly transmitted to a specific node of the distributed database system. The specific node is, for example, a specific processing node for high priority sensor data which is capable to shut down the manufacturing device and/or manufacturing process to avoid damage of the manufactured product or the manufacturing device/system.

According to further embodiments the machine preferably contains a data storage outside the product, wherein the data storage is adapted to at least temporarily store data relating to the product. Typically, it is preferred that the data storage is protected against manipulation. For example, the data can be stored in an encrypted form or a cryptographic checksum can be generated when being stored allowing to verifying the data when retrieving the data from the data storage.

Fig. 1 shows a schematic drawing of an example of the use of the inventive product, wherein the product 1 is a burner of a gas turbine manufactured using 3D-printing. Herein, the product 1 contains a unique identifier 2 allowing to identify the specific product unit using an identifying unit 3. The identification is performed without contacting the product 1 by reading out the content of a RFID chip being the unique identifier 2. Herein, the RFID chip is located inside the product being not visible.

The identifying unit 3 contains a processing unit being a hardware oracle to allow a secure exchange between the identifying unit 3 and the distributed database 6. In the specific case the corresponding data of the unique identifier 2 is stored on a data storage 5 to put said data also to use during a later time when the product 1 is already introduced into the machine 8. The data exchange between the identifying unit 3 and the distributed database 6 can also include, for example, retrieving information from the distributed database 6 where and how data of the unique identifier 2 can be retrieved. For example, based on data acquired from the unique identifier 2 specific further data regarding the unique identifier 2 can be retrieved from the distributed database 6 allowing to control the identifying unit 3 and/or to send a key or protocol to the unique identifier 2 which in turn allows downloading additional data to the identifying unit 3. For example, it can be realized as shown in figure 1 that the controls 7 of the machine 8 request the corresponding data from the data storage of the identifying unit 5 and request the information from the distributed database 6. This allows the operator of the machine 8 to easily access such data. Such system additionally allows to retrieve specific data from the product 1 only after verifying that the retrieval is allowed, wherein such right to retrieve the data can be also granted or revoked at a later point by changing the data of the distributed database 6.

Based on the data of the unique identifier 2 the machine 8 being a gas turbine retrieves a data structure product from a distributed database 6 and stores it on the data storage 5. Said data structure product contains operating data, maintenance data and a smart contract. The smart contract is adapted to monitor the use of the product 1 after being introduced into the machine 8 to, for example, trigger signals to the operator 9 in case of specific situations.

The present invention was described in further detail for explanatory purposes only . However, the invention is not to be understood being limited to these embodiments as they represent embodiments providing additional benefits to solve specific problems or fulfilling specific needs.

## Claims

1. Product (1) manufactured using an additive manufacturing process, wherein the additive manufacturing process is selected from selective laser melting, selective laser sintering, electron beam melting and binder jetting, wherein the product (1) contains a unique identifier device (2) to identify the specific product (1),
wherein the unique identifier device (2) contains a data storage,
wherein the unique identifier (2) contains a processing unit, wherein the unique identifier device (2) contains a wireless interface contained in the product,
**characterized in that** the unique identifier device (2) is a hidden unique identifier device (2),
wherein the hidden unique identifier device (2) is located inside the product (1),
wherein the processing unit is adapted to authenticate a request regarding the unique identifier device (2).

2. Product (1) according to claim 1, wherein the product (1) is adapted to be part of a gas turbine or steam turbine, wherein the product (1) is selected from the group consisting of heat shields, blades, vanes, burners and parts of a burner.

3. Kit containing a product according to any of claims 1 to 2 and a data structure product, wherein the data structure product contains data regarding a specific product according to any of claims 1 to 2, wherein the data structure product is adapted to be associated to the specific product (1) using the unique identifier device (2).

4. Kit according to claim 3, wherein the data structure product contains operational data, maintenance data, security keys and/or communication data of the product.

5. Method of using a product (1) according to any of claims 1 to 2, wherein the use contains the step of acquiring a data structure product according to claim 4 from a data storage (5) or a distributed database (6) based on the unique identifier device (2) of the product.

6. Method of using a product (1) according to claim 5, wherein data regarding the location of the unique identifier device (2) are retrieved from a data storage (5) and/or distributed database (6).

7. Machine containing a product according tc any of claims 1 to 2.

8. Machine (8) according to claim 7, wherein the machine (8) contains a second data storage outside the product (1), wherein the second data storage is adapted to at least temporarily store data relating to the product.

## Patentansprüche

1. Produkt (1), das unter Verwendung eines Prozess der additiven Fertigung hergestellt wird, wobei der Prozess der additiven Fertigung aus selektivem Laserschmelzen, selektivem Lasersintern, Elektronenstrahlschmelzen und Binder-Jetting ausgewählt ist, wobei das Produkt (1) eine Vorrichtung (2) zur eindeutigen Kennung enthält, um das spezifische Produkt (1) zu identifizieren,
wobei die Vorrichtung (2) zur eindeutigen Kennung einen Datenspeicher enthält,
wobei die eindeutige Kennung (2) eine Verarbeitungseinheit enthält, wobei die Vorrichtung (2) zur eindeutigen Kennung eine drahtlose Schnittstelle enthält, die in dem Produkt enthalten ist,
**dadurch gekennzeichnet, dass** die Vorrichtung (2) zur eindeutigen Kennung eine versteckte Vorrichtung (2) zur eindeutigen Kennung ist,
wobei sich die versteckte Vorrichtung (2) zur eindeutigen Kennung innerhalb des Produkts (1) befindet,
wobei die Verarbeitungseinheit dazu ausgelegt ist, eine Anforderung in Bezug auf die Vorrichtung (2) zur eindeutigen Kennung zu authentifizieren.

2. Produkt (1) nach Anspruch 1, wobei das Produkt (1) dazu ausgelegt ist, Teil einer Gasturbine oder Dampfturbine zu sein, wobei das Produkt (1) aus der Gruppe ausgewählt ist, die aus Wärmeschildern, Schaufeln, Leitschaufeln, Brennern und Teilen eines Brenners besteht.

3. Kit, das ein Produkt nach einem der Ansprüche 1 bis 2 und ein Datenstrukturprodukt enthält, wobei das Datenstrukturprodukt Daten bezüglich eines spezifischen Produkts nach einem der Ansprüche 1 bis 2 enthält,
wobei das Datenstrukturprodukt dazu ausgelegt ist, unter Verwendung der Vorrichtung (2) zur eindeutigen Kennung dem spezifischen Produkt (1) zugeordnet zu werden.

4. Kit nach Anspruch 3, wobei das Datenstrukturprodukt Betriebsdaten, Wartungsdaten, Sicherheitsschlüssel und/oder Kommunikationsdaten des Produkts enthält.

5. Verfahren zum Verwenden eines Produkts (1) nach einem der Ansprüche 1 bis 2, wobei die Verwendung den Schritt des Erfassens eines Datenstrukturprodukts nach Anspruch 4 aus einem Datenspeicher (5) oder einer verteilten Datenbank (6) basierend auf der Vorrichtung (2) zur eindeutigen Kennung des Produkts enthält.

6. Verfahren zum Verwenden eines Produkts (1) nach Anspruch 5, wobei Daten bezüglich der Stelle der Vorrichtung (2) zur eindeutigen Kennung aus einem Datenspeicher (5) und/oder einer verteilten Datenbank (6) abgerufen werden.

7. Maschine, die ein Produkt nach einem der Ansprüche 1 bis 2 enthält.

8. Maschine (8) nach Anspruch 7, wobei die Maschine (8) einen zweiten Datenspeicher außerhalb des Produkts (1) enthält, wobei der zweite Datenspeicher ausgelegt ist, Daten in Bezug auf das Produkt mindestens vorübergehend zu speichern.

## Revendications

1. Produit (1) fabriqué au moyen d'un procédé de fabrication additive, dans lequel le procédé de fabrication additive est sélectionné parmi la fusion sélective par laser, le frittage sélectif par laser, la fusion par faisceau d'électrons et la projection de liant, dans lequel le produit (1) contient un dispositif d'identifiant unique (2) pour identifier le produit (1) spécifique,
dans lequel le dispositif d'identifiant unique (2) contient un stockage de données,
dans lequel l'identifiant unique (2) contient une unité de traitement, dans lequel le dispositif d'identifiant unique (2) contient une interface sans fil contenue dans le produit,
**caractérisé en ce que** le dispositif d'identifiant unique (2) est un dispositif d'identifiant unique caché (2),
dans lequel le dispositif d'identifiant unique caché (2) est situé à l'intérieur du produit (1),
dans lequel l'unité de traitement est adaptée pour authentifier une demande concernant le dispositif d'identifiant unique (2).

2. Produit (1) selon la revendication 1, dans lequel le produit (1) est adapté pour faire partie d'une turbine à gaz ou d'une turbine à vapeur, dans lequel le produit (1) est sélectionné dans le groupe constitué de boucliers thermiques, d'aubes, d'ailettes, de brûleurs et de parties d'un brûleur.

3. Kit contenant un produit selon l'une quelconque des revendications 1 à 2 et un produit de structure de données, dans lequel le produit de structure de données contient des données concernant un produit spécifique selon l'une quelconque des revendications 1 à 2,
dans lequel le produit de structure de données est adapté pour être associé au produit (1) spécifique au moyen du dispositif d'identifiant unique (2).

4. Kit selon la revendication 3, dans lequel le produit de structure de données contient des données fonctionnelles, des données de maintenance, des clés de sécurité et/ou des données de communication du produit.

5. Procédé d'utilisation d'un produit (1) selon l'une quelconque des revendications 1 à 2, dans lequel l'utilisation contient l'étape d'acquisition d'un produit de structure de données selon la revendication 4 à partir d'un stockage de données (5) ou d'une base de données distribuée (6) en fonction du dispositif d'identifiant unique (2) du produit.

6. Procédé d'utilisation d'un produit (1) selon la revendication 5, dans lequel des données concernant l'emplacement du dispositif d'identifiant unique (2) sont récupérées à partir d'un stockage de données (5) et/ou d'une base de données distribuée (6).

7. Machine contenant un produit selon l'une quelconque des revendications 1 à 2.

8. Machine (8) selon la revendication 7, dans laquelle la machine (8) contient un second stockage de données à l'extérieur du produit (1), dans laquelle le second stockage de données est adapté pour stocker au moins temporairement des données relatives au produit.
